# EUROPEAN PATENT APPLICATION

(11) **EP 4 796 884 A1**
(43) Date of publication of application: **26.08.2026**
(21) Application number: 24945164.2
(22) Date of filing: 09.07.2024
(51) Int. Cl.: F28D 20/00, F28F 9/00, F28F 9/26, F22B 33/12, F24H 7/02

(54) **SOLID ELECTRIC HEAT STORAGE BOILER HAVING SEGMENTED SKID-MOUNTED COMBINED STRUCTURE**

(30) Priority: 20.06.2024 CN 202410800721
(71) Applicant: Shenyang Shijie Electrical Appliance Co., Ltd, Shenyang, Liaoning 110168 (CN)
(72) Inventor: ZHU, Jianxin, Shenyang, Liaoning 110168 (CN); ZHAO, Shiyao, Shenyang, Liaoning 110168 (CN); ZHANG, Shuai, Shenyang, Liaoning 110168 (CN); ZHU, Yuhui, Shenyang, Liaoning 110168 (CN)
(74) Representative: Stiel, Jürgen
(86) International application number: PCT/CN2024/104388
(87) International publication number: WO 2025/260422

(57) **Abstract**

Provided is a solid electric heat-storage boiler with a sectional skid-mounted combined structure, including a first combination mode, a second combination mode, a third combination mode, and a fourth combination mode. Each of the four combination modes includes multi-section heat-storage boxes, and is combined via box connection. In the present disclosure, by providing multi-section heat-storage boxes, the requirement for container weight limit during sea transportation may be satisfied while ensuring heat storage capacity, thereby reducing the transportation costs. The multi-section heat-storage boxes and a heat exchange section box adopt a skid-mounted structure, which enables standardized production of a device in a factory, allows combined application according to construction conditions and heat utilization parameters of the user's site, and facilitates multi-layer stacked assembly construction, thereby reducing the on-site footprint.

## Description

### TECHNICAL FIELD

The present disclosure relates to the field of solid electric heat storage technologies, and in particular, to a solid electric heat-storage boiler with a sectional skid-mounted combined structure.

### BACKGROUND

With the increasing number of projects for optimized utilization of clean electric energy, solid electric heat-storage devices have gained a strong foothold in the heat energy storage industry due to their high cost performance, stability, and reliability, and have been widely recognized by users. Traditional solid electric heat-storage devices are mostly integrated devices, for example, "Combined Structure of Skid-Mounted Solid Electric Heat-storage boiler" with the application number CN202410297718.5 is a conventional skid-mounted container-type solid electric heat-storage boiler, where all functional structural facilities are mounted within one standard container. However, during sea transportation, each container body loaded onto a ship has size and weight requirements. Generally, the weight of a 40-foot container should not exceed 30.48 tons. For a skid-mounted solid electric heat-storage boiler using a 40-foot container as its housing, the sum of the cumulative weight of the heat exchange components loaded in the container body, the weight of the thermal insulation portion, and the self-weight of the container body is not less than 15 tons, and the weight allocated for loading the solid heat-storage body inside should preferably not exceed 15 tons. Consequently, the heat storage capacity provided to the user may not exceed 4000 kWh. This limits the application scope of the skid-mounted solid electric heat-storage boiler. Therefore, the integrated arrangement of existing solid electric heat-storage boilers results in the problems of difficult transportation, high transportation cost, and limited application scope.

### SUMMARY

In view of the above shortcomings in the prior art, an object of the present disclosure is to provide a solid electric heat-storage boiler with a sectional skid-mounted combined structure, aiming to solve the problem in the prior art that, for a solid electric heat-storage boiler where all functional structural facilities are mounted within one standard container, the integrated arrangement results in difficult transportation and high transportation costs during transportation.

To achieve the above object, the present disclosure adopts the following technical solutions.

A solid electric heat-storage boiler with a sectional skid-mounted combined structure is provided, including a heat exchange section box. The solid electric heat-storage boiler further includes: a first combination mode including the heat exchange section box, an intermediate section heat-storage box and a basic section heat-storage box, a high-temperature zone of the heat exchange section box is connected to an end of the intermediate section heat-storage box, and an inter-section connection zone of the intermediate section heat-storage box is connected to an end of the basic section heat-storage box; a second combination mode including the heat exchange section box and a basic section heat-storage box, a high-temperature zone of the heat exchange section box is connected to an end of the basic section heat-storage box; a third combination mode including the heat exchange section box, a front intermediate section heat-storage box, a rear intermediate section heat-storage box, and a basic section heat-storage box, an inter-section connection zone of the front intermediate section heat-storage box is connected to a solid heat-storage body within the rear intermediate section heat-storage box, a high-temperature zone of the heat exchange section box is connected to a solid heat-storage body of the front intermediate section heat-storage box, and an inter-section connection zone of the rear intermediate section heat-storage box is connected to the basic section heat-storage box; and a fourth combination mode including the heat exchange section box, a heat-storage box A, a heat-storage box B, and a heat-storage box C, a high-temperature zone of the heat exchange section box is connected to the heat-storage box A, an inter-section connection zone of the heat-storage box A is connected to the heat-storage box B, and an inter-section connection zone of the heat-storage box B is connected to the heat-storage box C.

Further, each box is provided with a flange structure at a connection point, and the boxes are connected through a box connection including: a connection sealing member configured as a waterproof rubber gasket arranged between flange structures of adjacent boxes; a connection fastener configured as a bolt fastening assembly penetrating the flange structures of the adjacent boxes; and an inter-section thermal insulation structure configured as a thermal insulation assembly arranged at a connection of adjacent boxes.

Further, the heat exchange section box includes: a box body; a heat exchange assembly having one end connected to a side of a high-temperature zone of the box body; the circulation fan connected to the other end of the heat exchange assembly, and the other end of the circulation fan is connected to a return air passage; a passage door assembly consisting of two pedestrian passage doors arranged at opposite positions on two vertical surfaces of the box body on a side close to the circulation fan; an access door arranged on the side of the high-temperature zone of the box body and in communication with the high-temperature zone; and an electric control cabinet arranged inside a side of the box body and connected to each electrical component.

Further, the basic section heat-storage box includes: a basic section heat-storage box body; a thermal insulation foundation arranged at a bottom of the basic section heat-storage box body; a solid heat-storage body arranged inside the basic section heat-storage box body and placed on the thermal insulation foundation; a thermal insulation layer arranged between the solid heat-storage body and the basic section heat-storage box body; a low-temperature zone arranged at an end of the basic section heat-storage box body and located between the solid heat-storage body and the thermal insulation layer; a heat-storage box return air passage arranged at an upper portion of the solid heat-storage body and located between the solid heat-storage body and the thermal insulation layer; and an access door arranged on a low-temperature zone side of the basic section heat-storage box body and in communication with the low-temperature zone.

Further, the intermediate section heat-storage box includes: an intermediate section heat-storage box body; a thermal insulation foundation arranged at a bottom of the intermediate section heat-storage box body; a solid heat-storage body arranged inside the intermediate section heat-storage box body and placed on the thermal insulation foundation; a thermal insulation layer arranged between the solid heat-storage body and the intermediate section heat-storage box body; a heat-storage box return air passage arranged at an upper portion of the solid heat-storage body and located between the solid heat-storage body and the thermal insulation layer; and an access door arranged on an inter-section connection zone side of the intermediate section heat-storage box body and in communication with the inter-section connection zone.

Further, a box multi-layer stacked assembly structure is provided, including: a combined structure platform; a vertical ladder arranged on a side of the combined structure platform; the heat exchange section box arranged on the combined structure platform, and further provided with a plurality of passage door assemblies on a side of the box; and a plurality of heat-storage boxes arranged on the combined structure platform.

Further, a box transportation structure is provided, including: a box transportation sealing plate configured as a fixed metal plate temporarily arranged on a box end face flange structure during transportation, the box transportation sealing plate is connected to the box; a sealing plate fixing member temporarily penetrating the box transportation sealing plate on the box end face flange structure during transportation, the sealing plate fixing member is fastened to the box; a heat-storage body front fixing structure temporarily arranged at a front end of the solid heat-storage body of the heat-storage box during transportation, the heat-storage body front fixing structure is connected to the heat-storage box; and a heat-storage body rear fixing structure temporarily arranged at a rear end of the solid heat-storage body of the heat-storage box during transportation, the heat-storage body rear fixing structure is connected to the heat-storage box.

The technical solutions adopted by the present disclosure have the following beneficial effects.

In the present disclosure, by providing multi-section heat-storage boxes, the requirement for container weight limit during sea transportation may be satisfied while ensuring heat storage capacity, thereby reducing the transportation costs. The multi-section heat-storage boxes and the heat exchange section box adopt a skid-mounted structure, which enables standardized production of a device in a factory, allows combined application according to heat utilization parameters on site, and facilitates multi-layer stacked assembly construction, thereby reducing the on-site footprint.

### BRIEF DESCRIPTION OF THE DRAWINGS

FIG. 1 is a schematic side view of a first combination mode of the present disclosure;
FIG. 2 is a schematic top view of a first combination mode of the present disclosure;
FIG. 3 is a schematic diagram of a high-voltage electrical connection of a first combination mode of the present disclosure;
FIG. 4 is a schematic side view of a second combination mode of the present disclosure;
FIG. 5 is a schematic top view of a second combination mode of the present disclosure;
FIG. 6 is a schematic diagram of a high-voltage electrical connection of a second combination mode of the present disclosure;
FIG. 7 is a schematic diagram of a low-power low-voltage electrical connection of a second combination mode of the present disclosure;
FIG. 8 is a schematic side view of a third combination mode of the present disclosure;
FIG. 9 is a schematic top view of a third combination mode of the present disclosure;
FIG. 10 is a schematic diagram of a high-voltage electrical connection of a third combination mode of the present disclosure;
FIG. 11 is a schematic side view of a fourth combination mode of the present disclosure;
FIG. 12 is a schematic top view of a fourth combination mode of the present disclosure;
FIG. 13 is a schematic diagram of a low-power high-voltage electrical connection of a fourth combination mode of the present disclosure;
FIG. 14 is a schematic diagram of an inter-section box connection structure of the present disclosure;
FIG. 15 is a schematic diagram of a structural form of a heat exchange section box during transportation according to the present disclosure;
FIG. 16 is a schematic diagram of a structural form of an intermediate/A/B section heat-storage box during transportation according to the present disclosure;
FIG. 17 is a schematic diagram of a structural form of a basic/C section heat-storage box during transportation according to the present disclosure;
FIG. 18 is a schematic top plan view of a compound mounting structure of the present disclosure.

### Reference Numerals

1. Heat exchange section box; 2. Intermediate section heat-storage box; 3. Basic section heat-storage box; 4. Heat-storage box A; 5. Heat-storage box B; 6. Heat-storage box C; 7. Inter-section thermal insulation structure; 8. Connection fastener; 9. Connection sealing member; 10. Box flange structure; 11. Insulation partition plate; 12. Heat exchange assembly; 13. Circulation fan; 14. Return air passage; 15. Electric control cabinet; 16. High-temperature zone; 17. Inter-section connection zone; 18. Low-temperature zone; 19. Heat-storage box return air passage; 20. Solid heat-storage body; 21. Thermal insulation foundation; 22. Thermal insulation layer; 23. Access door; 24. Box transportation sealing plate; 25. Sealing plate fixing member; 26. Heat-storage body front fixing structure; 27. Heat-storage body rear fixing structure; 28. Combined structure platform; 29. Vertical ladder; 30. Passage door assembly.

### DETAILED DESCRIPTION OF EMBODIMENTS

The following detailed descriptions are provided with reference to the accompanying drawings to further illustrate exemplary implementations of the present disclosure. Although the exemplary implementations of the present disclosure are shown in the accompanying drawings, it should be understood that the present disclosure may be implemented in various forms and should not be construed as being limited to the implementations set forth here. Rather, these embodiments are provided for a thorough and complete understanding of the present disclosure such that the scope of the present disclosure may be fully conveyed to those skilled in the art. Unless otherwise specified, technical means employed in the embodiments are conventional means well known to those skilled in the art.

It should be noted that, unless otherwise indicated, the technical or scientific terms used herein have the same meaning as commonly understood by those skilled in the art to which the present disclosure pertains. In this specification, the relational terms such as "first" and "second" are used merely to distinguish one entity or operation from another and do not necessarily require or imply any such actual relationship or order between these entities or operations. The terms "connected", "coupled", and the like should be construed broadly. For example, it may refer to a fixed connection, a detachable connection, or an integral formation; it may also refer to a mechanical connection or an electrical connection; it may further refer to a direct connection or an indirect connection through an intermediate medium. The terms "comprise", "include", and any other variations thereof are intended to cover non-exclusive inclusion so that a process, method, article, or device that includes a list of elements is not limited to those elements, but may also include other elements not expressly listed or inherent to such process, method, article, or device. Without any further limitation, an element defined by the phrase "including ..." does not exclude additional identical elements in the process, method, article, or device that includes the stated element.

The present embodiment provides a solid electric heat-storage boiler with a sectional skid-mounted combined structure, which may have a plurality of combined structural forms depending on the operating voltage, device power, and heat storage capacity requirements.

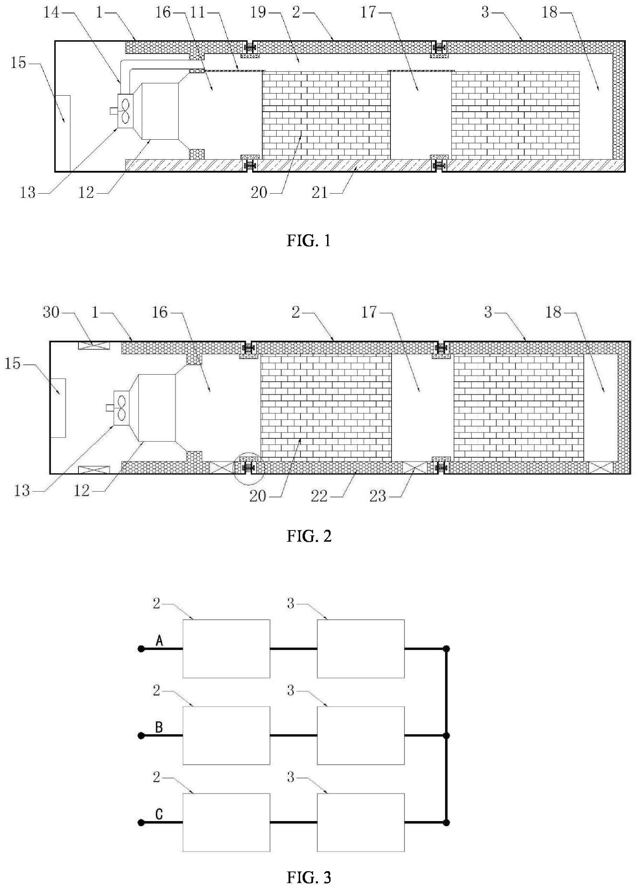

FIG. 1, FIG. 2, and FIG. 3 illustrate a first combination mode which is a standard heat storage capacity mode, and mainly includes a heat exchange section box 1, an intermediate section heat-storage box 2, and a basic section heat-storage box 3. A box end face of a high-temperature zone 16 on a side of a heat exchange assembly 12 of the heat exchange section box 1 is provided with a box flange structure 10. Two end faces of the intermediate section heat-storage box 2 are provided with box flange structures 10. A box end face of the basic section heat-storage box 3 is provided with a box flange structure 10, and the other end face is sealed with a blind plate. A thermal insulation layer 22 is provided in the blind plate, and a low-temperature zone 18 is located between the thermal insulation layer 22 and a solid heat-storage body. During combined mounting, the heat exchange section box 1, the intermediate section heat-storage box 2, and the basic section heat-storage box 3 are connected in sequence. A Connection sealing member 9 is filled between the interconnected box flange structures 10 to achieve sealing and waterproofing effects, and a connection fastener 8 is used for tightening to ensure a safe and reliable box connection. Finally, an inter-section thermal insulation structure 7 is used for thermal insulation treatment at a connection point. The high-temperature zone 16 and the inter-section connection zone 17 are isolated from a heat-storage box return air passage 19 by an insulation partition plate 11, thereby separating the high-temperature and low-temperature air paths to avoid air mixing.

During system output operation, under the action of a circulation fan 13, high-temperature hot air in the high-temperature zone 16 enters the heat exchange assembly 12, so thatr heat energy undergoes heat exchange through the heat exchange assembly 12 and is released as low-temperature air. The low-temperature air then enters each heat-storage box return air passage 19 via a return air passage 14, and finally flows into the low-temperature zone 18. The low-temperature air in the low-temperature zone 18 sequentially flows through a solid heat-storage body 20 of the basic section heat-storage box 3, the inter-section connection zone 17, and thae solid heat-storage body 20 of the intermediate section heat-storage box 2, and forms high-temperature hot air again and enters the high-temperature zone 16. The above circulation process is repeated. Finally, the heat energy stored in the solid heat-storage body 20 of the basic section heat-storage box 3 and the solid heat-storage body 20 of the intermediate section heat-storage box 2 is output as heat supply through the heat exchange assembly 12 in the form of a required heat medium.

The bottom of each of the heat exchange section box 1, the intermediate section heat-storage box 2, the basic section heat-storage box 3, a heat-storage box A4, a heat-storage box B5, and a heat-storage box C6 is provided with a thermal insulation foundation 21. The heat exchange assembly 12 in the heat exchange section box 1 is placed on the thermal insulation foundation 21, and the solid heat-storage bodies 20 in other heat-storage boxes are placed on the thermal insulation foundation 21.

The inter-section connection zone 17 is not only a hot air connection zone but also an electrical connection zone for the intermediate section heat-storage box 2 and the basic section heat-storage box 3, thereby allowing access for construction and maintenance through an access door 23. FIG. 3 shows a schematic diagram of a high-voltage electrical connection. An electrical system consists of three sets of devices, and each set of devices consists of three types of boxes: the heat exchange section box 1, the intermediate section heat-storage box 2, and the basic section heat-storage box 3. High-voltage electrical elements in the intermediate section heat-storage box 2 and the basic section heat-storage box 3 are connected according to the manner shown in FIG. 3.

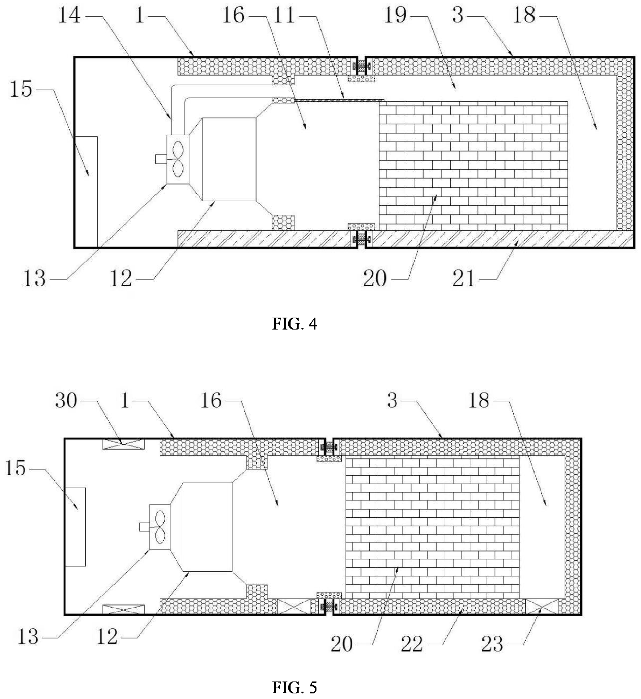

FIG. **4,** FIG. 5, FIG. 6, and FIG. 7 illustrate a second combination mode which is a low heat storage capacity mode, and mainly includes a heat exchange section box 1 and a basic section heat-storage box 3. A box end face of a high-temperature zone 16 on a side of a heat exchange assembly 12 of the heat exchange section box 1 is provided with a box flange structure 10. A box end face of the basic section heat-storage box 3 is provided with a box flange structure 10, the other end face is a low-temperature zone 18, and a thermal insulation layer 22 is provided between the low-temperature zone 18 and the box. During combined mounting, the heat exchange section box 1 and the basic section heat-storage box 3 are connected. A connection sealing member 9 is filled between interconnected box flange structures 10 to achieve sealing and waterproofing effects, and a connection fastener 8 is used for tightening to ensure a safe and reliable box connection. Finally, an inter-section thermal insulation structure 7 is used for thermal insulation treatment at a connection point. The high-temperature zone 16 is isolated from a heat-storage box return air passage 19 by an insulation partition plate 11, thereby separating the high-temperature and low-temperature air paths to avoid air mixing.

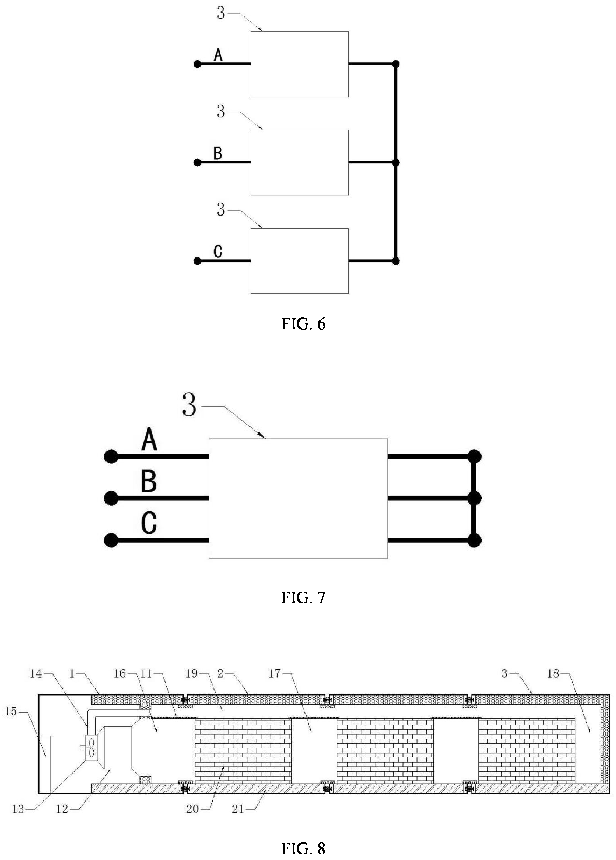

During a system output operation, under the action of a circulation fan 13, high-temperature hot air in the high-temperature zone 16 enters the heat exchange assembly 12, heat energy undergoes heat exchange through the heat exchange assembly 12 and is released as low-temperature air. The low-temperature air then enters the heat-storage box return air passage 19 via a return air passage 14, and finally flows into the low-temperature zone 18. The low-temperature air in the low-temperature zone 18 flows through a solid heat-storage body 20 of the basic section heat-storage box 3, and forms high-temperature hot air again and enters the high-temperature zone 16. The above circulation process is repeated. Finally, the heat energy stored in the solid heat-storage body 20 of the basic section heat-storage box 3 is output as heat supply through the heat exchange assembly 12 in the form of a required heat medium. FIG. 6 shows a schematic diagram of a high-voltage electrical connection. An electrical system consists of three sets of devices, and each set of devices consists of two types of boxes: the heat exchange section box 1 and the basic section heat-storage box 3. High-voltage electrical elements in the basic section heat-storage box 3 are connected according to the manner shown in FIG. 3. FIG. 7 shows a schematic diagram of a low-power low-voltage electrical connection. An electrical system consists of one set of devices, and the set of devices consists of two types of boxes: the heat exchange section box 1 and the basic section heat-storage box 3. Low-voltage electrical elements in the basic section heat-storage box 3 are connected according to the manner shown in FIG. 7.

FIG. 8, FIG. 9, and FIG. 10 illustrate a third combination mode which is a high-power, high heat storage capacity mode, and mainly includes a heat exchange section box 1, a plurality of intermediate section heat-storage boxes 2, and a basic section heat-storage box 3. A box end face of a high-temperature zone 16 on a side of a heat exchange assembly 12 of the heat exchange section box 1 is provided with a box flange structure 10. Two end faces of the intermediate section heat-storage boxes 2 are provided with box flange structures 10. A box end face of the basic section heat-storage box 3 is provided with a box flange structure 10, the other box end face is a low-temperature zone 18, and a thermal insulation layer 22 is provided between the low-temperature zone 18 and the box.

During combined mounting, the heat exchange section box 1, the plurality of intermediate section heat-storage boxes 2, and the basic section heat-storage box 3 are connected in sequence. A connection sealing member 9 is filled between the interconnected box flange structures 10 to achieve sealing and waterproofing effects, and a connection fastener 8 is used for tightening to ensure a safe and reliable box connection. Finally, an inter-section thermal insulation structure 7 is used for thermal insulation treatment at a connection point. The high-temperature zone 16 and the inter-section connection zones 17 are isolated from the heat-storage box return air passage 19 by an insulation partition plate 11, thereby separating the high-temperature and low-temperature air paths to avoid air mixing.

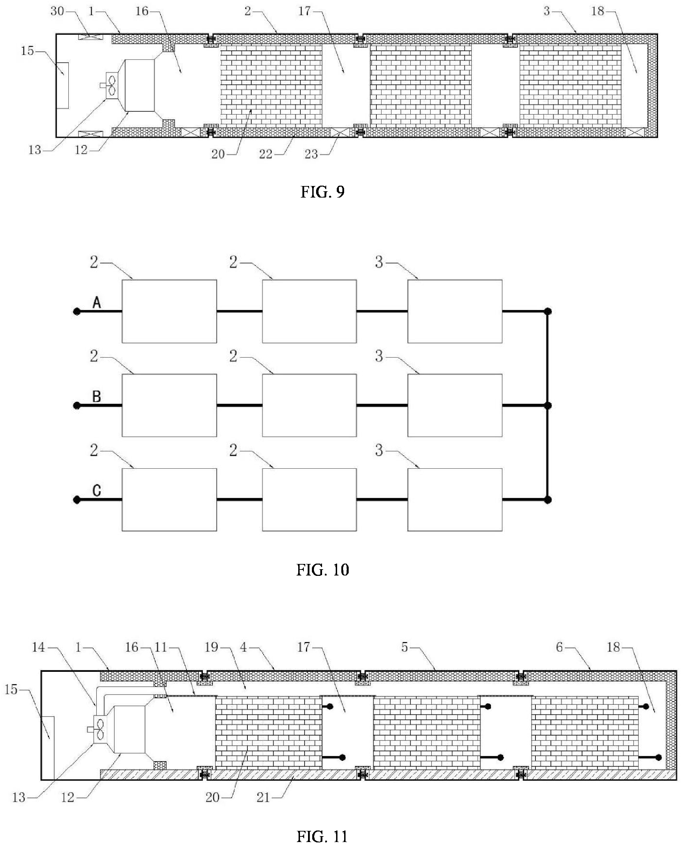

During a system output operation, under the action of a circulation fan 13, high-temperature hot air in the high-temperature zone 16 enters the heat exchange assembly 12, heat energy undergoes heat exchange through the heat exchange assembly 12 and is released as low-temperature air. The low-temperature air then enters each heat-storage box return air passage 19 via a return air passage 14, and finally flows into the low-temperature zone 18. The low-temperature air in the low-temperature zone 18 sequentially flows through a solid heat-storage body 20 of the basic section heat-storage box 3, each inter-section connection zone 17, and a solid heat-storage body 20 of the intermediate section heat-storage box 2, and forms high-temperature hot air again and enters the high-temperature zone 16. The above circulation process is repeated. Finally, the heat energy stored in the solid heat-storage body 20 of the basic section heat-storage box 3 and the solid heat-storage body 20 of the intermediate section heat-storage box 2 is output as heat supply through the heat exchange assembly 12 in the form of a required heat medium. FIG. 10 shows a schematic diagram of a high-voltage electrical connection. An electrical system consists of three sets of devices, and each set of devices consists of three types of boxes: the heat exchange section box 1, a plurality of intermediate section heat-storage boxes 2, and the basic section heat-storage box 3. High-voltage electrical elements in the intermediate section heat-storage boxes 2 and the basic section heat-storage box 3 are connected according to the manner shown in FIG. 10.

FIG. 11, FIG. 12, and FIG. 13 illustrate a fourth combination mode which is a high-voltage, low heat storage capacity mode, and mainly includes a heat exchange section box 1, a heat-storage box A4, a heat-storage box B5, and a heat-storage box C6. A box end face of a high-temperature zone 16 on a side of a heat exchange assembly 12 of the heat exchange section box 1 is provided with a box flange structure 10. Two end faces of each of the heat-storage box A4 and the heat-storage box B5 are provided with box flange structures 10. A box end face of the heat-storage box C6 is provided with a box flange structure 10, the other box end face is a low-temperature zone 18, and a thermal insulation layer 22 is provided between the low-temperature zone 18 and the box.

During combined mounting, the heat exchange section box 1, the heat-storage box A4, the heat-storage box B5, and the heat-storage box C6 are connected in sequence. A connection sealing member 9 is filled between interconnected box flange structures 10 to achieve the sealing and waterproofing effects, and a connection fastener 8 is used for tightening to ensure a safe and reliable box connection. Finally, an inter-section thermal insulation structure 7 is used for thermal insulation treatment at a connection point. The high-temperature zone 16 and the inter-section connection zone 17 are isolated from the heat-storage box return air passage 19 by an insulation partition plate 11, thereby separating the high-temperature and low-temperature air paths to avoid air mixing.

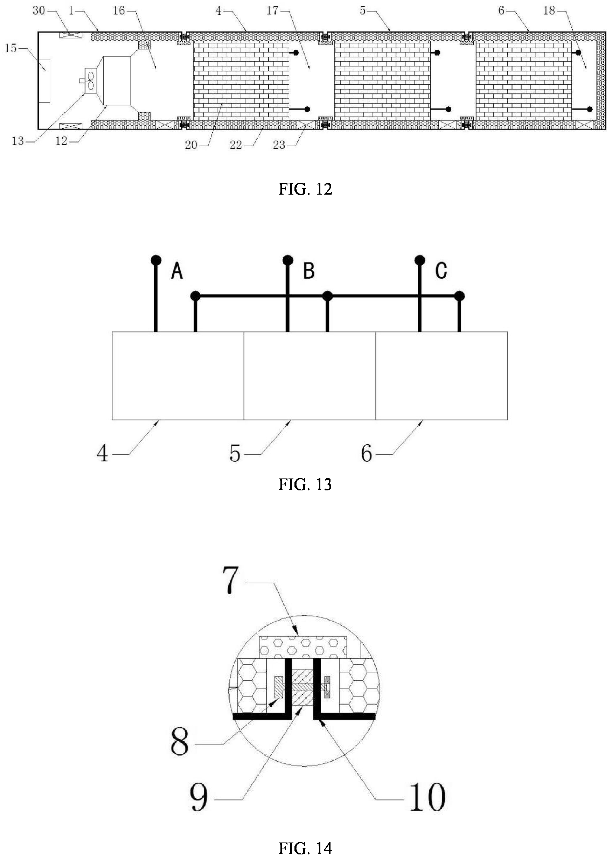

During a system output operation, under the action of a circulation fan 13, high-temperature hot air in the high-temperature zone 16 enters the heat exchange assembly 12, heat energy undergoes heat exchange through the heat exchange assembly 12 and is released as low-temperature air. The low-temperature air then enters each heat-storage box return air passage 19 via a return air passage 14, and finally flows into the low-temperature zone 18. The low-temperature air in the low-temperature zone 18 sequentially flows through a solid heat-storage body 20 of the heat-storage box C6, the inter-section connection zone 17, a solid heat-storage body 20 of the heat-storage box B5, the inter-section connection zone 17, and a solid heat-storage body 20 of the heat-storage box A4, and forms high-temperature hot air again and enters the high-temperature zone 16. The above circulation process is repeated. Finally, the heat energy stored in the solid heat-storage body 20 of the heat-storage box C6, the solid heat-storage body 20 of the heat-storage box B5, and the solid heat-storage body 20 of the heat-storage box A4 is output as heat supply through the heat exchange assembly 12 in the form of a required heat medium. FIG. 13 shows a schematic diagram of a high-voltage electrical connection. An electrical system consists of one set of devices, and the set of devices consists of four types of boxes: the heat exchange section box 1, the heat-storage box A4, the heat-storage box B5, and the heat-storage box C6. The high-voltage electrical elements in the heat-storage box A4, the heat-storage box B5, and the heat-storage box C6 are connected according to the manner shown in FIG. 13.

The heat exchange section box includes: a box body, a heat exchange assembly 12, a circulation fan 13, a passage door assembly 30, an access door 23, and an electric control cabinet 15. The heat exchange assembly 12 has one end connected to a high-temperature zone side of the box body, and the other end connected to the circulation fan 13. The circulation fan 13 has one end connected to the heat exchange assembly 12, and the other end connected to a return air passage. The passage door assembly 30 consists of two pedestrian passage doors arranged at opposite positions on two vertical surfaces of the box body on a side close to a circulation fan 13. The access door 23 is arranged on the high-temperature zone side of the box body and in communication with the high-temperature zone. The electric control cabinet 15 is arranged inside the box body and connected to each electrical component.

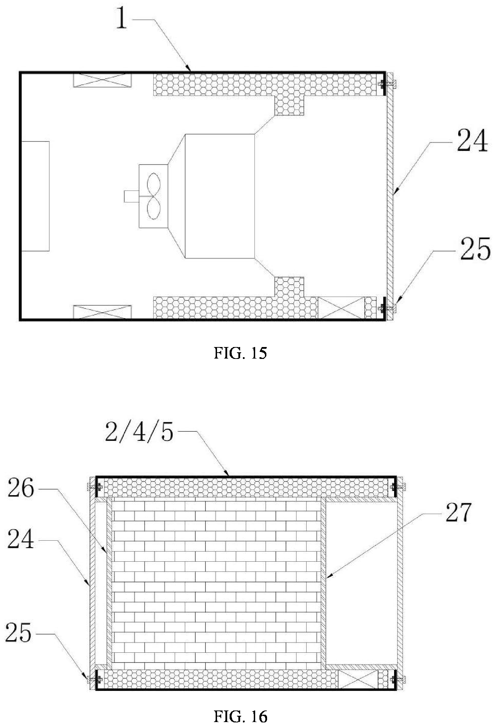

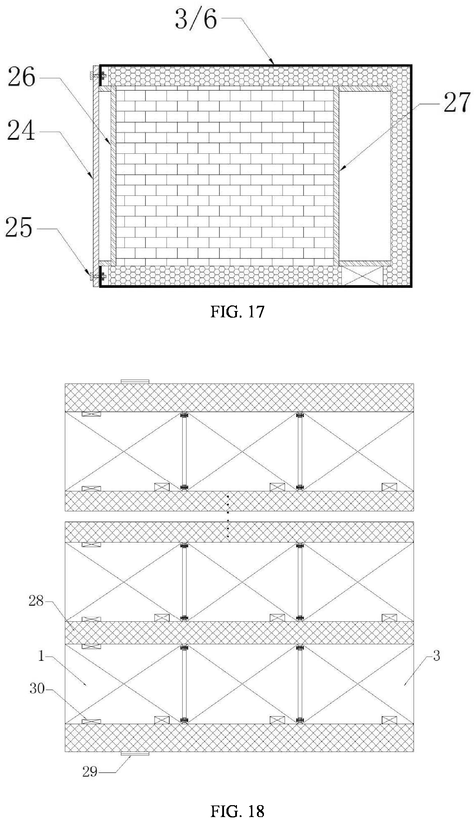

In this embodiment, a transportation system for a solid electric heat-storage boiler with a sectional skid-mounted combined structure is provided. FIG. 15, FIG. 16, and FIG. 17 illustrate a structural state of each box during transportation. FIG. 15 shows a transportation state of the heat exchange section box 1. During transportation, a box transportation sealing plate 24 is fixed on an end face box flange structure 10, and is fixedly mounted by a sealing plate fixing member 25. FIG. 16 shows a transportation state of the intermediate section heat-storage box 2, the heat-storage box A4, and the heat-storage box B5. During transportation, a box transportation sealing plate 24 is fixed on an end face box flange structure 10, and is fixedly mounted by a sealing plate fixing member 25. Additionally, a heat-storage body front fixing structure 26 and a heat-storage body rear fixing structure 27 are provided at a front side and a rear side to increase structural strength and prevent the risk of displacement of the solid heat-storage body 20 during transportation. FIG. 17 shows a transportation state of the basic section heat-storage box 3 and the heat-storage box C6. During transportation, a box transportation sealing plate 24 is fixed on an end face box flange structure 10, and is fixedly mounted by a sealing plate fixing member 25. Additionally, a heat-storage body front fixing structure 26 and a heat-storage body rear fixing structure 27 are provided at front and rear sides to increase structural strength and prevent the risk of displacement of the solid heat-storage body 20 during transportation.

FIG. 18 is a schematic top plan view of a compound mounting structure. Each layer is provided with a plurality of sets of assembled devices. A combined structure platform 28 is arranged between devices, and a vertical ladder 29 is further provided. During operation, the passage door assemblies 30 of the heat exchange section box 1 allow passage through each set of devices for performing corresponding work. With such a structural design, no platform is arranged at the front and rear, which may both reduce the footprint of the project and decrease the steel structure construction costs of the project.

The specific implementations of the present disclosure described above are not intended to limit the protection scope of the present disclosure. Any other corresponding changes and modifications made based on the technical concept of the present disclosure shall be included within the protection scope of the claims of the present disclosure.

## Claims

1. A solid electric heat-storage boiler with a sectional skid-mounted combined structure, comprising a heat exchange section box, wherein the solid electric heat-storage boiler further comprises:
a first combination mode comprising the heat exchange section box, an intermediate section heat-storage box and a basic section heat-storage box, wherein a high-temperature zone of the heat exchange section box is connected to an end of the intermediate section heat-storage box, and an inter-section connection zone of the intermediate section heat-storage box is connected to an end of the basic section heat-storage box;
a second combination mode comprising the heat exchange section box and a basic section heat-storage box, wherein a high-temperature zone of the heat exchange section box is connected to an end of the basic section heat-storage box;
a third combination mode comprising the heat exchange section box, a front intermediate section heat-storage box, a rear intermediate section heat-storage box, and a basic section heat-storage box, wherein an inter-section connection zone of the front intermediate section heat-storage box is connected to a solid heat-storage body within the rear intermediate section heat-storage box, a high-temperature zone of the heat exchange section box is connected to a solid heat-storage body of the front intermediate section heat-storage box, and an inter-section connection zone of the rear intermediate section heat-storage box is connected to the basic section heat-storage box; and
a fourth combination mode comprising the heat exchange section box, a heat-storage box A, a heat-storage box B, and a heat-storage box C, wherein a high-temperature zone of the heat exchange section box is connected to the heat-storage box A, an inter-section connection zone of the heat-storage box A is connected to the heat-storage box B, and an inter-section connection zone of the heat-storage box B is connected to the heat-storage box C.

2. The solid electric heat-storage boiler with a sectional skid-mounted combined structure according to claim 1, wherein each box is provided with a flange structure at a connection point, and the boxes are connected through a box connection comprising:
a connection sealing member configured as a waterproof rubber gasket arranged between flange structures of adjacent boxes;
a connection fastener configured as a bolt fastening assembly penetrating the flange structures of the adjacent boxes; and
an inter-section thermal insulation structure configured as a thermal insulation assembly arranged at a connection of adjacent boxes.

3. The solid electric heat-storage boiler with a sectional skid-mounted combined structure according to claim 1, wherein the heat exchange section box comprises:
a box body;
a heat exchange assembly having one end connected to a side of a high-temperature zone of the box body, and the other end connected to a circulation fan;
the circulation fan having one end connected to the heat exchange assembly, and the other end connected to a return air passage;
a passage door assembly consisting of two pedestrian passage doors arranged at opposite positions on two vertical surfaces of the box body on a side close to the circulation fan;
an access door arranged on the side of the high-temperature zone of the box body and in communication with the high-temperature zone; and
an electric control cabinet arranged inside a side of the box body and connected to each electrical component.

4. The solid electric heat-storage boiler with a sectional skid-mounted combined structure according to claim 1, wherein the basic section heat-storage box comprises:
a basic section heat-storage box body;
a thermal insulation foundation arranged at a bottom of the basic section heat-storage box body;
a solid heat-storage body arranged inside the basic section heat-storage box body and placed on the thermal insulation foundation;
a thermal insulation layer arranged between the solid heat-storage body and the basic section heat-storage box body;
a low-temperature zone arranged at an end of the basic section heat-storage box body and located between the solid heat-storage body and the thermal insulation layer;
a heat-storage box return air passage arranged at an upper portion of the solid heat-storage body and located between the solid heat-storage body and the thermal insulation layer; and
an access door arranged on a low-temperature zone side of the basic section heat-storage box body and in communication with the low-temperature zone.

5. The solid electric heat-storage boiler with a sectional skid-mounted combined structure according to claim 1, wherein the intermediate section heat-storage box comprises:
an intermediate section heat-storage box body;
a thermal insulation foundation arranged at a bottom of the intermediate section heat-storage box body;
a solid heat-storage body arranged inside the intermediate section heat-storage box body and placed on the thermal insulation foundation;
a thermal insulation layer arranged between the solid heat-storage body and the intermediate section heat-storage box body;
a heat-storage box return air passage arranged at an upper portion of the solid heat-storage body and located between the solid heat-storage body and the thermal insulation layer; and
an access door arranged on an inter-section connection zone side of the intermediate section heat-storage box body and in communication with the inter-section connection zone.

6. The solid electric heat-storage boiler with a sectional skid-mounted combined structure according to claim 1, further comprising a box multi-layer stacked assembly structure, wherein the box multi-layer stacked assembly structure comprises:
a combined structure platform;
a vertical ladder arranged on a side of the combined structure platform;
the heat exchange section box arranged on the combined structure platform, and further provided with a plurality of passage door assemblies on a side of the box; and
a plurality of heat-storage boxes arranged on the combined structure platform.

7. The solid electric heat-storage boiler with a sectional skid-mounted combined structure according to claim 1, further comprising a box transportation structure, wherein the box transportation structure comprises:
a box transportation sealing plate configured as a fixed metal plate temporarily arranged on a box end face flange structure during transportation, wherein the box transportation sealing plate is connected to the box;
a sealing plate fixing member temporarily penetrating the box transportation sealing plate on the box end face flange structure during transportation, wherein the sealing plate fixing member is fastened to the box;
a heat-storage body front fixing structure temporarily arranged at a front end of the solid heat-storage body of the heat-storage box during transportation, wherein the heat-storage body front fixing structure is connected to the heat-storage box; and
a heat-storage body rear fixing structure temporarily arranged at a rear end of the solid heat-storage body of the heat-storage box during transportation, wherein the heat-storage body rear fixing structure is connected to the heat-storage box.
